# EUROPÄISCHE PATENTSCHRIFT

(11) **EP 0 916 472 B1**
(45) Veröffentlichungstag und Bekanntmachung des Hinweises auf die Patenterteilung: **10.09.2003**
(21) Anmeldenummer: 98119981.3
(22) Anmeldetag: 22.10.1998
(51) Int. Cl.: B29C 49/32, B29C 49/30

(54) **Verfahren und Vorrichtung zum Betreiben einer Mehrfachkavitäten-Blasformmaschine**
Method and apparatus for operating multi cavity blow moulding machine
Procédé et dispositif pour faire fonctionner une machine de moulage par soufflage à cavités multiples

(30) Priorität: 11.11.1997 DE 19749626
(43) Veröffentlichungstag der Anmeldung: 19.05.1999
(73) Patentinhaber: SIG Blowtec GmbH & Co. KG, 53842 Troisdorf (DE)
(72) Erfinder: Wehrens, Dirk, 53757 St. Augustin (DE); Meier, Rudolf, 53797 Lohmar (DE); Schüller, Frank, 50226 Königsdorf (DE); Döhmen, Willi, 41065 Mönchengladbach (DE)
(74) Vertreter: Valentin, Ekkehard, Dipl.-Ing.

(56) Entgegenhaltungen:
- EP-A- 0 570 393
- EP-A- 0 872 329
- US-A- 4 560 340

## Beschreibung

Die Erfindung betrifft ein Verfahren und eine Vorrichtung zum Betreiben einer Mehrfachkavitäten-Blasformmaschine zum Herstellen von flaschen-, dosen- oder tubenförmigen Hohlkörpern aus Kunststoff, mit einer Extrusions- bzw. Kopfstation, in der im geöffneten Zustand der Formhälften die Schläuche für die Kunststoff-Rohlinge zugeführt werden und einer Blas- bzw. Kalibrierstation, in die danach die geschlossenen Formhälften verfahren sowie die Rohlinge mittels in die geschlossene Form einführbaren Blasdornen durch Einpressen von Druckluft in ihre den Blasform-Kavitäten entsprechende Gestalt gebracht werden, worauf die Blasform geöffnet und nach der Entnahme der geblasenen und kalibrierten Hohlkörper, die von dort einer Nachbearbeitung zugeleitet werden, zur erneuten Beschickung mit Schlauch-Abschnitten der extrudierten Materialschläuche zur Extrusionsstation zurücktransportiert wird.

Derartige Mehrfach- bzw. Langhub-Blasformmaschinen sind bspw. durch die EP 0 570 393 B1 und den Prospekt "Langhub-Blasformmaschinen" von Fischer-W. Müller Blasformtechnik, Januar 1996, bekanntgeworden. Bei diesen Blasformmaschinen sind somit die Extrusions- bzw. Kopfstation und die Blas- bzw. Kalibrierstation entlang einer vertikalen Längsmittelebene, d.h. auf einer Linie aneinandergereiht angeordnet, entlang welcher die Blasform mit den Formhälften zwischen ihrer Blas- bzw. Kalibrierstation und der Kopfstation zur Beschickung mit den Kunststoff-Schlauchabschnitten hin- und herverfahrbar ist.

Für die Zykluszeiten einer Blasformmaschine ist daher neben der eigentlichen Blaszeit (Kühlzeit) außerdem die Nebenzeit von entscheidender Bedeutung, die im wesentlichen durch die Transportbewegung sowie die Öffnungs- und Schließbewegung für die Formhälften bestimmt wird. Mit jeder weiteren Kavität bzw. jedem weiteren Formnest verlängert sich der lineare Transporthub, denn die Blasform mit dem Schließsystem muß in Richtung der Verbindungslinie der austretenden Schlauch-Vorformlinge die Blasformbreite überschreiten, was mit zunehmender Anzahl von Formnestern bzw. Kavitäten zu einer proportionalen Steigerung des Transporthubs und der dafür aufzuwendenden Zeit führt. Bei kurzen Kühlzeiten, z.B. für eine typische Flasche 5 Sekunden, kann die Transportbewegung an der sogenannten Langhubmaschine durchaus - bspw. bei mehr als vier Kavitäten bzw. Formnestern - in die gleiche Größenordnung kommen, was vor allen Dingen durch den damit einhergehenden größeren Transportweg von z.B. 1600 mm bedingt ist, wobei die Verfahrgeschwindigkeit zudem durch das hohe Gewicht des Schließsystems von mehreren (oberhalb 6 t) Tonnen beeinflußt wird. Eine solche große Masse kann von dem Verfahr- bzw. Transportsystem - ohne einen übermäßig großen Antriebsaufwand und selbst dann nur bedingt - nicht so schnell von der einen in die andere Position bewegt werden. Das kann es mit sich bringen, daß die Nebenzeit höher als die eigentliche Blas- und Kühlzeit ist, was die Wirtschaftlichkeit der Langhubmaschine entscheidend beeinflußt, da sich hierdurch die Anzahl der pro Stunde herzustellenden Hohlkörper entsprechend verringert.

Der Erfindung liegt daher die Aufgabe zugrunde, ein Verfahren und eine Vorrichtung der gattungsgemäßen Art zu schaffen, mit denen sich die Zykluszeiten einer Mehrfachkavitäten-Blasformmaschine, insbesondere die Zeit für den Transport der geschlossenen Blasform aus der Kopf- in die Blasstation und zurück, auf ein Minimum verringern lassen.

Diese Aufgabe wird nach der Erfindung verfahrensmäßig dadurch gelöst, daß der Transporthub zwischen der Kopfstation und der Blasstation rechtwinklig zur Verbindungslinie der nebeneinanderliegend angeordneten Kavitäten bzw. Formnester ausgeführt wird. Hierbei wurde erkannt, daß mit dieser verblüffend einfachen Maßnahme, nämlich statt einem Längs- einen Querhub auszuführen, der Transporthub völlig unabhängig von der Anzahl der vorhandenen Formnester bzw. Kavitäten ist, die sich somit beliebig steigern lassen, ohne dadurch die Zeit für den erforderlichen Transporthub zu erhöhen. Es braucht lediglich noch die von der Geometrie bzw. den Abmessungen der Kopf- und der Kalibrierstation abhängige Distanz überwunden zu werden. Aufgrund des durch den erfindungsgemäßen Querhub kurzen Weges für das Verstellen der Blasform aus der Kopfstation in die dazu parallel angeordnete Blas- bzw. Kalibrierstation läßt sich die Nebenzeit der Langhubmaschine so verringern, daß sie deutlich unter der für den Herstellungsbetrieb unbedingt und notwendigerweise einzuhaltenden Blas- und Kühlzeit liegt; pro Zeiteinheit sind daher zudem entsprechend Mehrtakte möglich.

Aufgrund der erfindungsgemäßen Verfahrbewegung von einer Ausgangsposition (Kopfstation) in eine dazu parallele zweite Position (Kalibrierstation) läßt sich zudem die Baugröße der Langhubmaschine insgesamt verringern, wie auch ein kleinerer Aufwand für die Hydraulikantriebe ausreicht, weil der zurückzulegende Weg gegenüber den bekannten Langhubmaschinen nur kurz ist.

Eine Vorrichtung zum Durchführen des Verfahrens sieht erfindungsgemäß vor, daß die Blasform querverfahrbar zur Kopfstation in einem Maschinenrahmen angeordnet ist. Die Blasform kann durch die Querverstellung mit einem sehr kurzen Hub, bspw. statt 1600 mm nur 200 mm, aus der Extrusions- bzw. Kopfstation in die dazu parallele Lage der Blas- bzw. Kalibrierstation verfahren werden. Eine notwendige Nachbearbeitung, wie Stanzen und Nachkühlen, der geblasenen Hohlkörper kann danach in Stationen durchgeführt werden, die entweder ebenfalls parallel angeordnet und damit durch einen kurzen Querhub zu erreichen sind, oder auch wie bei den bekannten Langhubmaschinen in Längsrichtung dazu vorgesehen werden, was sich in letzterem Falle nicht mehr nachteilig auf die Zykluszeiten auswirkt und zudem nur noch geringe Massen bewegt werden müssen.

Nach einem Vorschlag der Erfindung greift mindestens ein Antrieb (elektrisch oder hydraulisch) an ein die Blasform mit der Schließeinheit tragendes Verfahrgestell an.

Nach einer Ausgestaltung der Erfindung ist der Kopfstation ein hebund senkbarer Schlauchzubringer zugeordnet. Sobald dieser angehoben ist, läßt sich die Blasform aus ihrer Ausgangsposition in der Kalibrierstation zur Kopfstation und zurück bewegen, ohne daß die zuzuführenden Schläuche den. Verfahrweg behindern können. Der Schlauchzubringer ist vorzugsweise mit Mitteln zum Schneiden, Verschweißen und/oder Vorblasen der Schlauchabschnitte versehen.

Alternativ ist auch eine Schlauchzuführung ohne einen solchen Schlauchzubringer möglich, wozu der Schlauchaustritt diskontinuierlich erfolgen müßte.

Weitere Einzelheiten und Vorteile der Erfindung ergeben sich aus den Patentansprüchen und der nachfolgenden Beschreibung, in der schematisch ein Ausführungsbeispiel des Gegenstandes der Erfindung dargestellt ist. Es zeigen:
- Figur 1: in sehr schematischer Draufsicht eine Mehrfachkavitäten-Blasformmaschine mit einer aus der Blas- bzw. Kalibrierstation in eine dazu parallele Lage einer Kopfstation verfahrbare Blasform, ohne Nachbearbeitungsstationen dargestellt; und
- Figur 2: die Blasformmaschine gemäß Fig. 1 in der Seitenansicht.

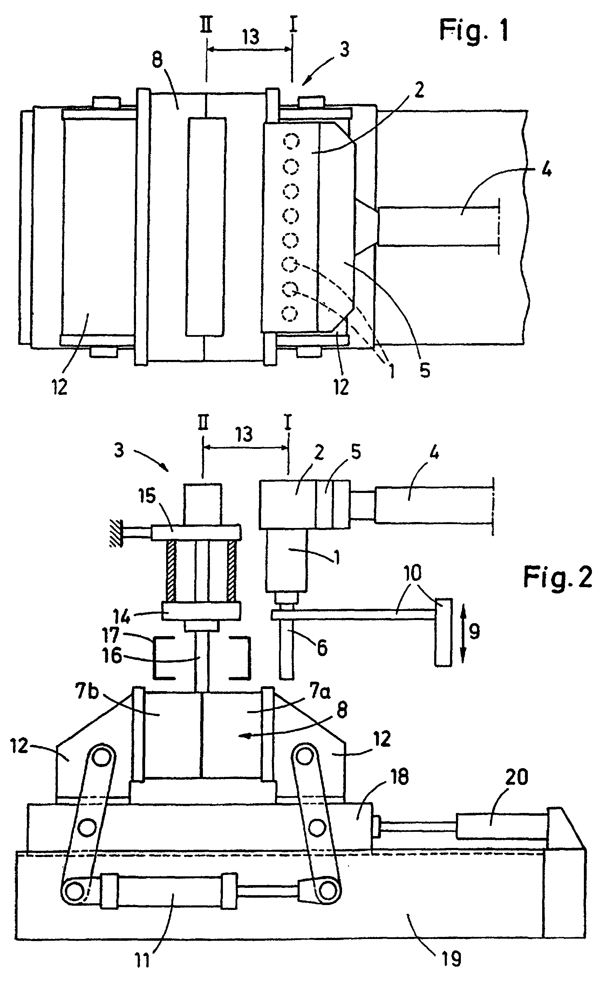

Einen in einer Linie zahlreiche im Abstand nebeneinanderliegende Kopfstränge 1 aufweisenden Mehrfachkopf 2 einer Mehrfachkavitäten-Blasformmaschine 3 wird das zur Herstellung der geblasenen Hohlkörper benötigte aufbereitete Kunststoff-Material mittels eines Extruders 4 und einem sich diesem anschließenden Verteiler 5 zugeleitet. Der Mehrfachkopf 2 befindet sich hierzu in einer ersten Arbeitsposition, der Extrusions- bzw. Kopfstation I, und gibt die für die Blasverformung benötigten Vorformlinge in Form von Schlauchabschnitten 6 (vgl. Fig. 2) in eine aus zwei Formhälften 7a, 7b bestehende, in dieser Betriebsposition abweichend von der Darstellung in den Fig. 1 und 2 unterhalb des Mehrfachkopfes 2 in geöffnetem Zustand der Formhälften 7a, 7b befindlichen Blasform 8 ab. Diese besitzt eine der Zahl der Kopfstränge 1 entsprechende Zahl von Kavitäten bzw. Formnestern. Das Abnehmen der Schlauchabschnitte 6 aus dem Mehrfachkopf 2 und Abgeben an die in die Betriebsposition I verfahrene Blasform 8 geschieht mittels eines in Fig. 2 schematisch gezeigten, gemäß dem Doppelpfeil 9 heb- und senkbaren Schlauchzubringers 10. Dieser kann, wenn die Schlauchabschnitte 6 nicht abgerissen werden sollen, Mittel zum Schneiden, Verschweißen sowie auch zum Vorblasen der Schlauchabschnitte 6 aufweisen. Die Formhälften 7a, 7b der Blasform 8 sind in einer von Schließzylindern 11 beaufschlagbaren Schließeinheit 12 angeordnet.

Nachdem die Schließeinheit 12 die Formhälften 7a, 7b mit den darin in den Formnestern eingeschlossenen Schlauchabschnitten 6 geschlossen hat, wird die Blasform 8 zusammen mit der Schließeinheit 12 aus ihrer Unterkopfposition unterhalb des Mehrfachkopfes 2 der Extrusions- bzw. Kopfstation I in einer zu dieser rechtwinkligen Linie mit dem Fahrhub 13 in die dazu parallele Lage der Blas- bzw. Kalibrierstation II verfahren. Dort werden über die Mehrfachblasdorn-Halteplatte 14 der Kalibriervorrichtung 15 sofort Blasdorne 16 (vgl. Fig. 2) in die zwischen den Formhälften 7a, 7b eingeschlossenen Schlauchabschnitte 6 eingebracht.

Nach Ablauf der Blaszeit öffnet die Blasform 8, worauf die Blasdorne 16 mit den drauf befindlichen, fertig geblasenen Hohlkörpern in eine mittlere Position angehoben werden (nicht dargestellt), aus der eine Entnahmevorrichtung 17, z.B. Entnahmegreifer oder eine Maske, die geblasenen Hohlkörper aufnimmt. Die Blasdorne 16 werden danach in eine nicht gezeigte obere Position angehoben, und die in der Mittelposition verbliebenen Hohlkörper werden mittels der Entnahmevorrichtung in Nachfolgestationen, z.B. zum Stanzen und zum Nachkühlen, weitertransportiert. Zwischenzeitlich holt sich die Blasform 8 die nächsten Vorformlinge bzw. Schlauchabschnitt 6 aus der Station I ab, und der Vorgang wiederholt sich.

Zum Hin- und Herverfahren aus der Linie der Extrusions- bzw. Kopfstation I in die dazu parallele Blas- bzw. Kalibrierstation II sind Blasform 8 und Schließeinheit 12 auf einem Verfahrgestell 18 eines Maschinenrahmens 19 der Mehrfachkavitäten-Blasformmaschine 3 angeordnet; die kurzen Transporthübe führt ein an das Verfahrgestell 18 angreifender, im Ausführungsbeispiel als Hubzylinder 20 ausgebildeter Antrieb aus.

## Patentansprüche

1. Verfahren zum Betreiben einer Mehrfachkavitäten-Blasformmaschine (3) zum Herstellen von flaschen-, dosen- oder tubenförmigen Hohlkörpern aus Kunststoff, mit einer Extrusions- bzw. Kopfstation (I), in der in geöffnetem Zustand der Formhälften (7 a, 7 b) einer Blasform (8) die Schläuche (6) für die Kunststoff-Rohlinge zugeführt werden, und einer Blas- bzw. Kalibrierstation (II), in die danach die geschlossenen Formhälften verfahren sowie die Rohlinge mittels in die geschlossene Form einführbaren Blasdornen (16) durch Einpressen von Druckluft in ihre den Blasformkavitäten entsprechende Gestalt gebracht werden, worauf die Blasform (8) geöffnet und nach der Entnahme der geschlossenen und kalibrierten Hohlkörper, die von dort einer Nachbearbeitung zugeleitet werden, zur erneuten Beschickung mit Schlauchabschnitten (6) der extrudierten Materialschläuche zur Extrusionsstation (I) zurücktransportiert wird,
**dadurch gekennzeichnet,**
**daß** der Transporthub zwischen der Kopfstation (I) und der Blasstation (II) rechtwinklig zur Verbindungslinie der nebeneinanderliegend angeordneten Kavitäten bzw. Formnester ausgeführt wird.

2. Vorrichtung zum Durchführen des Verfahrens nach Anspruch 1, bestehend aus einer Mehrfachkavitäten-Blasformmaschine (3) mit einer Kopf-, einer Blas- und mindestens einer Nachbearbeitungsstation und Antriebsmittel (20) zum Verfahren der Blasform (8) aus der Kopf- in die Blasstation (I und II) und umgekehrt,
**dadurch gekennzeichnet,**
**daß** die Blasform (8) querverfahrbahr zur Extrusions- bzw. Kopfstation (I) in einem Maschinenrahmen (19) angeordnet ist.

3. Vorrichtung nach Anspruch 2,
**gekennzeichnet durch**
mindestens einen an ein die Blasform (8) mit der Schließeinheit (12) tragendes Verfahrgestell (18) angreifenden Antrieb (20).

4. Vorrichtung nach Anspruch 2 oder 3,
**dadurch gekennzeichnet,**
**daß** der Extrusions- bzw. Kopfstation (I) ein heb- und senkbarer Schlauchzubringer (10) zugeordnet ist.

5. Vorrichtung nach Anspruch 4,
**dadurch gekennzeichnet,**
**daß** der Schlauchzubringer (10) mit Mitteln zum Schneiden, Verschweißen und/oder Vorblasen der Schlauchabschnitte (6) versehen ist.

## Claims

1. A method for operating a multiple-cavity blow moulding machine (3) for manufacturing bottle-shaped, can-shaped or tube-shaped hollow bodies of plastic, with an extruding or head station (I), in which the tubes (6) for the plastic blanks are fed to a blowing mould (8) while the mould halves (7a, 7b) are in the open state, and with a blowing or calibrating station (II), into which the closed mould halves are subsequently displaced and in which the blanks are shaped in accordance with the blowing mould cavities by introducing compressed air into the closed mould with the aid of blow nozzles (16) that can be inserted into the mould, wherein the blowing mould (8) is subsequently opened and, after removing the closed and calibrated hollow bodies that are then transported to a subsequent processing station, displaced back to the extruding station (I) in order to once again receive tube sections (6) of the extruded tube material,
**characterized by** the fact
that the travel between the extruding station (I) and the blowing station (II) is carried out perpendicular to the connecting line between the cavities or mould cavities that are arranged adjacent to one another.

2. A device for carrying out the method according to Claim 1, consisting of a multiple-cavity blow moulding machine (3) with an extruding station, a blowing station, at least one subsequent processing station and driving means (20) for displacing the blowing mould from the extruding station to the blowing station (I and II) and vice versa,
**characterized by** the fact
that the blowing mould (8) is arranged in a machine frame (19) such that it can be displaced transverse to the extruding or head station (I).

3. The device according to Claim 2,
**characterized by**
at least one drive (20) that engages on a movable frame (18) that carries the blowing mould (8) with the closing unit (12).

4. The device according to Claim 2 or 3,
**characterized by** the fact
that a vertically movable tube feeder (10) is assigned to the extruding or head station (I).

5. The device according to Claim 4,
**characterized by** the fact
that the tube feeder (10) is provided with means for cutting, welding and/or the preliminary blow moulding of the tube sections (6).

## Revendications

1. Procédé d'utilisation d'une machine de moulage par soufflage à cavités multiples (3) servant à la fabrication de corps creux en forme de bouteilles, boîtes ou tubes en matière plastique, comportant une station d'extrusion ou de sommet (I), dans laquelle, en position ouverte des moitiés de moules (7a, 7b) d'un moule finisseur (8), les tuyaux (6) pour les ébauches de matière plastique sont acheminés et sont conduits à une station de soufflage ou de calibrage (II) dans laquelle les moitiés de moules fermées sont ensuite conduites, de même que les ébauches sont amenées par insufflation d'air comprimé à leur forme correspondant aux cavités du moule finisseur au moyen de poinçons de soufflage (16) pouvant être introduits dans le moule fermé, sur quoi le moule finisseur (8) est ouvert et, après prélèvement des corps creux fermés et calibrés, qui sont acheminés de là vers une transformation ultérieure, est ramené à la station d'extrusion (I) pour y être de nouveau chargé de sections (6) de tuyaux extrudés de matière,
**caractérisé en ce que**
la course de transport entre la station de sommet (I) et la station de soufflage (II) est réalisée à angle droit par rapport à la ligne de liaison des cavités ou niches de moulage disposées l'une près de l'autre.

2. Dispositif pour la réalisation du procédé selon la revendication 1, consistant en une machine de moulage par soufflage à cavités multiples (3) avec une station de sommet, de soufflage et au moins une station de transformation ultérieure et des moyens de propulsion (20) pour conduire le moule finisseur (8) de la station de sommet à la station de soufflage (I et II) et vice versa,
**caractérisé en ce que**
le moule finisseur (8) est disposé dans un cadre de machine (19) de manière à pouvoir se déplacer transversalement par rapport à la station d'extrusion ou de sommet (I).

3. Dispositif selon la revendication 2,
**caractérisé par**
au moins une propulsion (20) ébranlant le châssis (18) supportant le moule finisseur (8) avec l'unité de fermeture (12).

4. Dispositif selon la revendication 2 ou 3,
**caractérisé en ce que**
à la station d'extrusion ou de sommet (I) est associé un dispositif d'acheminement de tuyaux (10) pouvant monter et descendre.

5. Dispositif selon la revendication 4,
**caractérisé en ce que**
le dispositif d'acheminement de tuyaux (10) est muni de moyens de découpe, de soudage et/ou de présoufflage des sections de tuyaux (6).
